# EUROPEAN PATENT APPLICATION

(11) **EP 1 212 937 A1**
(43) Date of publication of application: **12.06.2002**
(21) Application number: 01204738.7
(22) Date of filing: 07.12.2001
(51) Int. Cl.: A01K 11/00

(54) **Identification or verification of an identity on the basis of a milk flow profile.**

(30) Priority: 08.12.2000 NL 1016834
(71) Applicant: N.V. Nederlandsche Apparatenfabriek NEDAP, 7141 DC Groenlo (NL)
(72) Inventor: Harmsen, Jan Hendrik, 7255 BJ Hengelo (NL); Odinga, Kornelis, 7206 BG Zutphen (NL)
(74) Representative: Prins, Adrianus Willem

(57) **Abstract**

The farm management system is provided with a computer in which, per animal, information is stored about an identity of the animal. Furthermore, per animal, together with the identity of the animal, a reference milk flow profile of the animal is also stored in the computer, which reference milk flow profile comprises information about a dead milking time of the animal, a milking time of the animal, an intermediate milking time of the animal, the conductivity of the milk of the animal and/or a composition of the milk of the animal. The farm management system is further provided with means for carrying out measurements during the milking of the animal to obtain measured information about the milk flow profile of the animal, the computer being arranged to compare, in use, the measured milk flow profile of an animal with the stored reference milk flow profiles for identification of the relevant animal or for verification of the identity of the relevant animal.

## Description

This invention relates to a farm management system provided with a computer in which, per animal, information is stored about an identity of the animal.

Such farm management systems are known per se. Often, such a farm management system is also provided with an identification system to identify an animal. To this end, the animal may be provided with a known per se label, which comprises an electric circuit in which an identity code of the animal is stored. Often, the electric circuit comprises a resonance circuit, which reacts when brought into an electromagnetic interrogation field of a reading unit of the identification system. When the label is thus brought into the interrogation field, the resonance circuit gets into resonance. The electric circuit then generates a signal, which comprises the identity code, which can be received by the reading unit. To this end, the reading unit may be designed as, for instance, an absorption system or a transmission system. Often, such a reading unit is used when identifying animals that are milked. This milking of an animal is done automatically, for instance with a special milking plant.

A problem presenting itself is that an animal is sometimes milked that has not been identified. At the moment it is being realized that an animal has been milked of which the identity code was not known, the animal has often left the milking plant, which has the result that it is no longer clear which animal has been milked. This problem increases when use is made of milking parlors with walk-through animal recognition. When in that case an animal has not been recognized or does not wear a label, the animal is not recognized in the milking parlor. When the animals go to a milking plant via a walk-through animal recognition system, it is no longer clear which animal has given milk.

It is an object of the invention to provide a solution to the above-described problems.

To this end, the farm management system according to the invention is characterized in that per animal, together with the identity of the animal, a reference milk flow profile of the animal is also stored in the computer, which reference milk flow profile comprises information about a dead milking time of the animal, a milking time of the animal, an intermediate milking time of the animal, the conductivity of the milk of the animal and/or a composition of the milk of the animal, with the dead milking time being equal to the time within which an animal gives no milk at the beginning of the milking, the intermediate milking time being the time between a present and a previous milking pass, and the composition of the milk comprising information about, for instance, the amount of fat, protein, lactose and/or urea in the milk of the animal, the farm management system further being provided with means for carrying out measurements during the milking of the animal to obtain measured information about the milk flow profile of the animal, the computer being arranged to compare, in use, the measured milk flow profile of an animal with the stored reference milk flow profiles for identification of the relevant animal or for verification of the identity of the relevant animal. According to the invention, the identity of an animal can therefore be determined on the basis of a measured milk flow profile. When the identity of the animal has already been determined by means of, for instance, a known per se reading unit, it can be verified on the basis of the measured milk flow profile whether the identity of the relevant animal is correct. The measured milk flow profile is compared with the stored reference milk flow profile belonging to the identity of the identified animal.

In particular, it holds that the computer is arranged to compare the measured milk flow profiles of different milkings of the same animal so as to detect changes in the milk flow profile of the animal. These changes can be indications of a changed state of health of the animal.

It is also possible that the computer is arranged to upgrade the stored reference milk flow profile of the animal on the basis of the detected changes with respect to at least one measured milk flow profile of the relevant animal. Indeed, when an animal grows older, its milk flow profile will gradually change. The stored milk flow profile can then be adapted to this change so as to keep up-to-date, so that the identity of the animal can be determined or verified at any time on the basis of the stored milk profile.

In particular, it holds that the animal management system is provided with milking parlors with walk-through animal recognition. By comparing, after the milking, the measured milk flow profiles with the stored reference milk flow profiles, it is possible to verify the identity of the identified animals and/or determine the identity of animals so as to (still) connect each milk yield with the correct animal.

The invention will now be explained in more detail with reference to the drawing.

In this drawing:

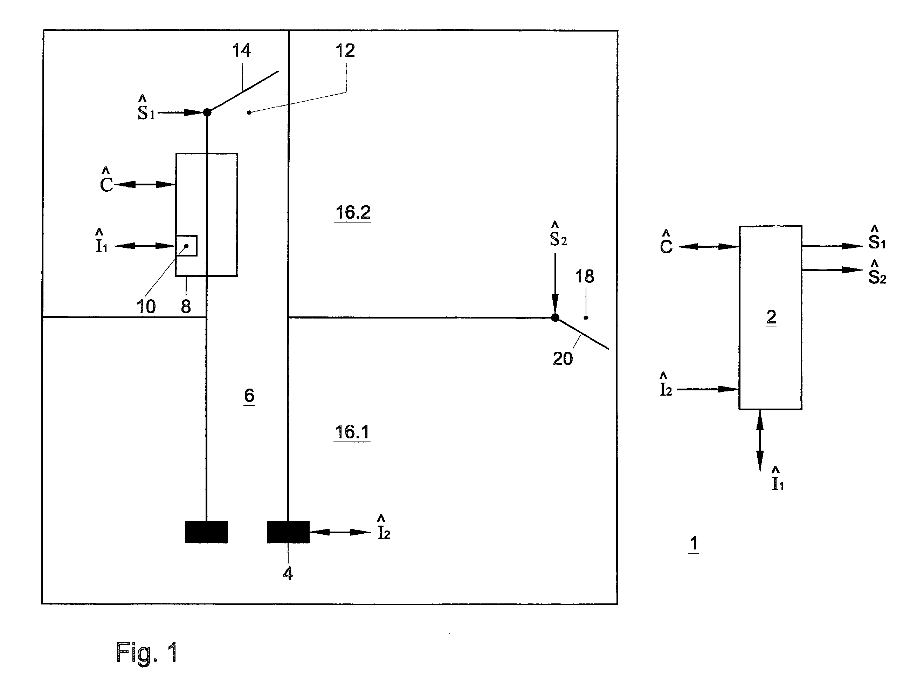

Fig. 1 shows a possible embodiment of the farm management system according to the invention.

The farm management system 1 is provided with a computer 2, in which, per animal, information is stored about an identity and a reference milk flow profile of the animal. To this end, the computer 2 may be provided with known per se means, such as a hard disk etc. The milk flow profile comprises information about the dead milking time of the animal, a milking time of the animal, an intermediate milking time of the animal and/or the composition of the milk of the animal. The dead milking time is equal to the time within which the animal gives no milk at the beginning of the milking. The intermediate milking time is equal to the time between a present and a previous milking pass. The composition of the milk comprises information about, for instance, the amount of fat, protein, lactose and/or urea in the milk. Also, the milk flow profile may comprise information about the conductivity of the milk of the animal.

In particular, the milk flow profile at least comprises information about the dead milking time and the milking time of the animal. Preferably, the milk flow profile further at least comprises information about the intermediate milking time of the animal. In particular, the milk flow profile further comprises information about the composition of the milk of the animal and optionally also information about the conductivity of the milk of the animal. In this example, the milk flow profile comprises information about the dead milking time, the intermediate milking time, the conductivity, and the composition. The animal management system is further provided with a known per se walk-through animal recognition 4. Located behind the walk-through animal recognition 4 is a path 6, which extends to an automatic milking plant 8. The automatic milking plant 8 (for instance a milking robot) is further provided with measuring means 10, which are included in a milk line of the automatic milking plant to carry out measurements at the milk of the animal to obtain measured information about the milk flow profile of the animal. The measuring means 10 are arranged to measure the dead milking time, the milking time, the intermediate milking time, the conductivity, and the composition.

In particular, it holds in this example that the measuring means are arranged to carry out the stated measurements per udder quarter of the animal. For each udder quarter, therefore, the dead milking time, the milking time, the composition, and the conductivity of the milked milk are determined per udder quarter of the animal.

It is observed that the intermediate milking time is not determined per udder quarter of the animal. The intermediate milking time depends on the moment at which the animal goes to the automatic milking plant 8 so as to be milked and therefore cannot be determined per udder quarter. Located downstream of the automatic milking plant is an exit 12, which can be released and closed by means of a controllable passage 14.

The walk-through animal recognition 4 is located in a space 16.1 of a milking parlor. The exit 12 is located in a second space 16.2, separated from the first space, of the milking parlor. Both spaces are interconnected via a passage 18. The passage 18 can be closed or released by means of a controllable barrier 20.

The computer 2 is further connected by means of a line Ĉ with the automatic milking plant 8 to control (start, stop etc.) the milking plant 8. Furthermore, the computer 2 is connected by means of a line Î₁ with the measuring means 10 to receive, from the measuring means 10, the information about the measured milk flow profile of an animal. Furthermore, the computer 2 is connected via a line Î₂ with the walk-through animal recognition 4 to receive information about the animals identified by means of the walk-through animal recognition 4. To this end, the walk-through animal recognition 4 may be provided with a known per se reading unit, which is arranged to read identity codes, which are stored in a label worn by the animal. To this end, the label may be provided with an electric circuit, in which the identity code is stored. The electric circuit may *inter alia* be provided with a resonance circuit, which reacts when brought into an interrogation field. To this end, a reading unit of the walk-through animal recognition 4 may be arranged to generate such an interrogation field. These are known per se techniques, which will hereinafter not be explained in more detail.

Furthermore, the computer 2 is connected via a line Ŝ₁ with the barrier 14 to control the barrier. Similarly, the computer is connected via a line Ŝ₂ with the barrier 18 to control the barrier 18.

The operation of the animal management system is as follows. An animal that wishes to be milked walks through the walk-through animal recognition system 4. The identity code of the label worn by the relevant animal is read out by the walk-through animal recognition 4. The identity code is fed to the computer 2. The animal then goes to the automatic milking plant 8. Subsequently, the animal is milked by means of the automatic milking plant 8. During the milking, the milk flow profile of the animal is determined by means of the measuring means 10 and fed to the computer 2. The computer can determine the identity of the animal on the basis of the measured milk flow profile. To this end, the computer looks for a stored reference milk flow profile that, within predetermined limits, corresponds with the measured milk flow profile. When the stored milk flow profile has been found that corresponds with the measured milk flow profile, the identity of the animal is also known. If desired, the thus determined identity may be used to verify that the identity determined by means of the walk-through animal recognition 4 is actually correct.

Moreover, the measured milk flow profile may be temporarily stored.

When it turns out that, after some time, more animals have been milked than identified by means of the walk-through animal recognition 4, it can yet be found out which animals have been milked. This is done as follows. The computer compares the stored reference milk flow profiles of the animals identified by means of the walk-through animal recognition 4 with the measured and temporarily stored milk flow profiles. More in particular, the computer selects a stored reference milk flow profile on the basis of a first identity determined by means of the walk-through animal recognition of an animal. Subsequently, the computer selects a measured and temporarily stored milk flow profile that, within predetermined limits, corresponds with the selected reference milk flow profile. This measured milk flow profile is marked as being identified. Subsequently, the computer repeats this for the other animals identified by means of the walk-through animal recognition 4. When thus all the measured milk flow profiles have been found that belong to the animals identified by means of the walk-through animal recognition, and which milk flow profiles have therefore been marked as being identified, the computer will carry out the following steps for the non-identified measured milk flow profiles. For each non-identified milk flow profile a stored reference milk flow profile is selected that, within predetermined limits, corresponds with the relevant (temporarily) stored measured milk flow profile. When thus a stored reference milk flow profile has been found that corresponds with a measured milk flow profile, the identity of the relevant animal is also known. Indeed, each stored reference milk flow profile has been relationally stored with the identity of the associated animal. Thus the identity of the animals that have been milked, and of which, for some reason or other, the identity has not been determined by means of the walk-through animal recognition 4, can still be determined.

Also, it may happen that in the path 6, after the animals have been identified by means of the walk-through animal recognition 4, the order of the animals is changed. This would mean that the identities of the relevant animals are also changed during the milking. Through the fact, however, that of each milked animal the milk flow profile is measured and compared with a stored reference milk flow profile, the computer can thus verify whether the identity of the relevant animal is correct. If this does not prove to be the case, then a reference milk flow profile that fits the measured milk flow profile can be selected so as to still correctly identify the animal.

In particular, even the walk-through animal recognition 4 can be omitted completely. In that case, each animal that has been milked is identified by the computer on the basis of its associated measured milk flow profile. Of each measured milk flow profile, within predetermined limits, a reference milk flow profile is selected, together with the associated identity of an animal.

The computer 2 can further operate the barrier 14 to release the exit 12 when an animal has been milked. Similarly, the computer 2 can operate the automatic milking plant via the line Ĉ to stop the milking of the animal.

Furthermore, the computer can operate the barrier 20 to open the barrier when the animals present in the space 16.2 are allowed again to go to the space 16.1. In this example, it holds that the information about the dead milking time, milking time composition and/or conductivity, comprises information about the dead milking time, milking time and/or the composition per predetermined udder quarter of the animal. This applies both to the reference milk flow profile and to the measured milk flow profile. In particular, it holds that the relevant information has been determined for only one predetermined udder quarter. Thus the animal is identified on the basis of the milk yield of one predetermined udder quarter. It is also possible, however, that the stated information relates to a plurality of predetermined udder quarters. The animal can be identified on the basis of the milk yield per udder quarter. In this manner, it is possible to check whether the correct animal has been identified. Also, the information can be processed per udder quarter in combination to identify the animal. In this connection, for instance, the averaging of the relevant information per udder quarter may be considered.

Preferably, it holds that the information about the dead milking time, milking time, composition and/or conductivity comprises information about the dead milking time, milking time and/or the composition and/or conductivity per predetermined udder quarter for a plurality of udder quarters of the relevant animal. In fact, the milk flow profile comprises a plurality of partial milk flow profiles, with each partial milk flow profile relating to the milk yield of one predetermined udder quarter of the animal. Such variants are each deemed to fall within the scope of the invention.

## Claims

1. A farm management system provided with a computer in which, per animal, information is stored about an identity of the animal, **characterized in that** per animal, together with the identity of the animal, a reference milk flow profile of the animal is also stored in the computer, which reference milk flow profile comprises information about a dead milking time of the animal, a milking time of the animal, an intermediate milking time of the animal, the conductivity of the milk of the animal and/or a composition of the milk of the animal, with the dead milking time being equal to the time within which an animal gives no milk at the beginning of the milking, the intermediate milking time being the time between a present and a previous milking pass, and the composition of the milk comprising information about, for instance, the amount of fat, protein, lactose and/or urea in the milk of the animal, the farm management system further being provided with means for carrying out measurements during the milking of the animal to obtain measured information about the milk flow profile of the animal, the computer being arranged to compare, in use, the measured milk flow profile of an animal with the stored reference milk flow profiles for identification of the relevant animal or for verification of the identity of the relevant animal.

2. An animal management system according to claim 1, **characterized in that** the reference milk flow profile and the measured milk flow profile at least comprise information about the dead milking time and the milking time of the animal.

3. An animal management system according to claim 2, **characterized in that** the reference milk flow profile and the measured milk flow profile further at least comprise information about the intermediate milking time of the animal.

4. An animal management system according to claim 2 or 3, **characterized in that** the reference milk flow profile and the measured milk flow profile further at least comprise information about the composition of the milk of the animal during the milking.

5. An animal management system according to claim 2, 3 or 4, **characterized in that** the reference milk flow profile and the measured milk flow profile further at least comprise information about the conductivity of the milk of the animal.

6. An animal management system according to any one of the preceding claims, **characterized in that** the computer is arranged to compare the measured milk flow profiles of different milkings of the same animal so as to detect changes in the milk flow profile of the animal.

7. An animal management system according to claim 6, **characterized in that** the computer is arranged to upgrade the stored reference milk flow profile of the animal on the basis of the detected changes with respect to at least one measured milk flow profile of the relevant animal.

8. An animal management system according to any one of the preceding claims, **characterized in that** the animal management system is further provided with milking parlors with walk-through animal recognition.

9. An animal management system according to claim 8, **characterized in that** the computer is arranged to compare, in case by means of the walk-through animal recognition fewer animals have been identified than milked, for each identified animal the stored reference milk flow profile with the measured milk flow profiles and to further mark as identified the measured milk flow profiles that, within predetermined limits, correspond with the stored reference milk flow profiles, so that, finally, only the measured milk flow profiles of the animals remain that have not been identified.

10. An animal management system according to claim 9, **characterized in that** on the basis of the remaining milk flow profiles reference milk flow profiles are selected that, within predetermined limits, correspond with the remaining milk flow profiles to thus determine the identity of the animals that had not been identified by the walk-through animal recognition.

11. An animal management system according to any one of the preceding claims, **characterized in that** the computer is arranged to select a reference - milk flow profile that, within predetermined limits, corresponds with a measured milk flow profile to determine the identity of the animal belonging to the measured milk flow profile.

12. An animal management system according to any one of the preceding claims, **characterized in that** the computer is arranged to at least temporarily store measured milk flow profiles.

13. An animal management system according to any one of the preceding claims, **characterized in that** the information about the dead milking time, milking time, composition and/or conductivity comprises information about the dead milking time, milking time and/or the composition and/or conductivity per predetermined udder quarter of the animal.

14. An animal management system according to claim 13, **characterized in that** the information about the dead milking time, milking time, composition and/or conductivity comprises information about the dead milking time, milking time and/or the composition and/or conductivity for a plurality of predetermined udder quarters of the animal.
